(19) Europäisches Patentamt
European Patent Office
Office européen des brevets

(11) **EP 2 872 353 B1**

(12) **EUROPÄISCHE PATENTSCHRIFT**

(45) Veröffentlichungstag und Bekanntmachung des Hinweises auf die Patenterteilung:
**29.05.2019 Patentblatt 2019/22**

(21) Anmeldenummer: **13756020.7**

(22) Anmeldetag: **21.08.2013**

(51) Int Cl.:
**B60L 3/00** (2019.01)     **H02M 1/12** (2006.01)
**H02P 5/74** (2006.01)

(86) Internationale Anmeldenummer:
**PCT/EP2013/067372**

(87) Internationale Veröffentlichungsnummer:
**WO 2014/033026 (06.03.2014 Gazette 2014/10)**

(54) **ANTRIEBSVERFAHREN MIT VERSCHIEBUNG DER SCHALTFREQUENZ UND ANTRIEBSVORRICHTUNG**

DRIVE METHOD WITH SHIFTING OF THE SWITCHING FREQUENCY AND DRIVE DEVICE

PROCÉDÉ D'ENTRAÎNEMENT À DÉCALAGE DE LA FRÉQUENCE DE COMMUTATION ET DISPOSITIF D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2012 DE 102012215152**

(43) Veröffentlichungstag der Anmeldung:
**20.05.2015 Patentblatt 2015/21**

(73) Patentinhaber: **Siemens Aktiengesellschaft
80333 München (DE)**

(72) Erfinder:
• **BACHMAIER, Georg
80469 München (DE)**
• **BERGMANN, Dominik
83679 Sachsenkam (DE)**
• **PAIS, Guillaume
81667 München (DE)**
• **BACHMANN, Christian
80339 München (DE)**
• **CYRIACKS, Marco
81669 München (DE)**
• **GERLICH, Matthias
80636 München (DE)**
• **POPESCU, Alexandru
81673 München (DE)**

(56) Entgegenhaltungen:
**EP-A2- 1 186 464     WO-A1-2008/028794
JP-A- H1 118 435     JP-A- 2009 060 691
US-A- 5 191 273**

**Beschreibung**

Die vorliegende Erfindung betrifft ein Verfahren zum Antreiben eines Fahrzeugs mit mindestens zwei Motoren durch Ansteuern jedes der Motoren mit je einem Ansteuersignal, welches eine jeweilige elektrische Motorfrequenz aufweist, durch je einen Inverter und Versorgen der Inverter über einen Zwischenkreis, der eine Resonanzfrequenz aufweist, mit Strom von einer Stromquelle. Die Inverter weisen eine gemeinsame Schaltfrequenz auf, und im Zwischenkreis treten Spektralanteile des dort fließenden Stroms auf, die Harmonische der elektrischen Motorfrequenzen um die Schaltfrequenz aufweisen. Darüber hinaus betrifft die vorliegende Erfindung eine entsprechende Antriebsvorrichtung für ein Fahrzeug.

Es gibt elektrisch betriebene Fahrzeuge, in deren Antriebsstrang zwei Elektromotoren vorgesehen sind, welche getrennt voneinander gesteuert werden. Daher sind die Motorgeschwindigkeiten und somit auch die elektrischen Motorfrequenzen nicht notwendigerweise die gleichen.

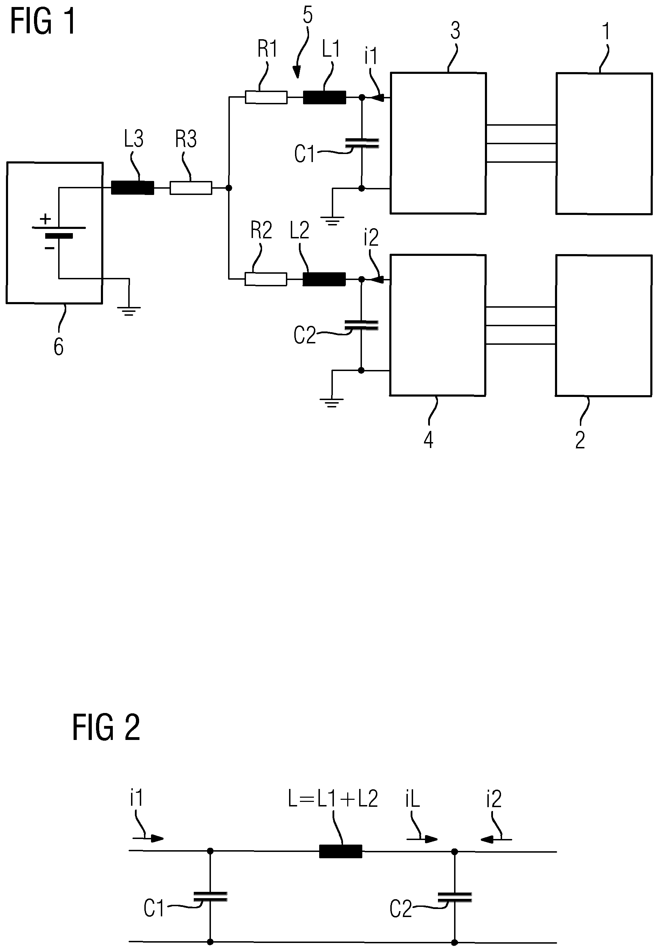

Eine Antriebsvorrichtung, wie sie der vorliegenden Erfindung zugrunde liegt, ist in FIG 1 wiedergegeben. Der Antriebsstrang besitzt hier beispielhaft zwei Motoren 1 und 2. Beide sind hier als Dreiphasenmotoren ausgebildet. Zur Ansteuerung der Motoren 1 und 2 dienen zwei Wechselrichter bzw. Inverter 3 und 4. Die Inverter 3 und 4 werden über einen Zwischenkreis 5 von einer Batterie 6 oder einer anderen Stromquelle gespeist. Gemäß dem in FIG 1 dargestellten Ersatzschaltbild weist die Zuleitung zu dem Inverter 3 einen Widerstand R1 und eine Leitungsinduktivität L1 auf. Dem Inverter 3 ist eine Koppelkapazität C1 vorgeschaltet, welche zum Zwischenkreis 5 gezählt wird. Die Zuleitung zum Inverter 4 besitzt einen Ohmschen Widerstand R2 und eine Leitungsinduktivität L2. Dem zweiten Inverter 4 ist eine Koppelkapazität C2 vorgeschaltet.

Der Zwischenkreis 5 wird von einer Batterie 6 mit einer Batterieinduktivität L3 und einem Innenwiderstand R3 gespeist. Für die weiteren Betrachtungen werden jedoch die Ohmschen Widerstände R1 bis R3 vernachlässigt. Außerdem ist die Batterieinduktivität L3 so hoch, dass sie gegenüber den Leitungsinduktivitäten L1 und L2 für den hochdynamischen Bereich vernachlässigt werden kann.

Aufgrund der obigen Vereinfachungen ergibt sich das vereinfachte Schaltbild des Zwischenkreises 5, das in FIG 2 dargestellt ist. Es zeigt eine Serienschaltung der Kapazität C1 und einer Induktivität L, wobei der Serienschaltung die Kapazität C2 parallel geschaltet ist. Die Induktivität L entspricht der Summe der Leitungsinduktivitäten L1 und L2. In den Knoten zwischen der Kapazität C1 und der Induktivität L fließt der Strom i1, welcher den ersten Inverter 3 verlässt (vgl. FIG 1). Darüber hinaus fließt in den Knoten zwischen der Induktivität L und der Kapazität C2 ein Strom i2, der den zweiten Inverter 4 verlässt. Die Induktivität L wird von einem Strom iL durchflossen.

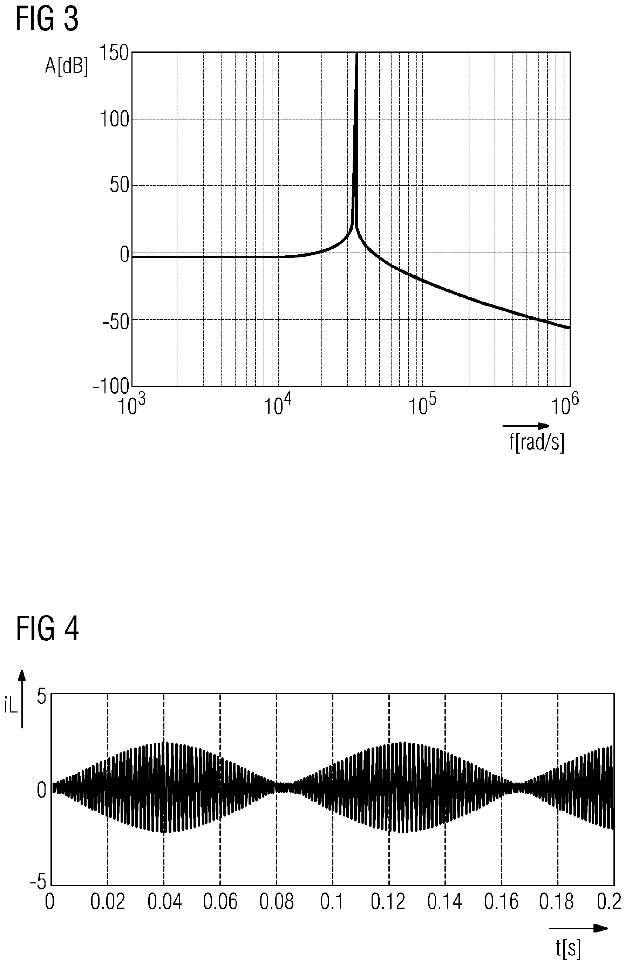

Das System von FIG 2 besitzt eine Resonanzfrequenz, was der Systemantwort von FIG 3 zu entnehmen ist. Diese liegt beispielsweise bei 5,3 kHz, wenn die Leitungsinduktivitäten 1,5 μH und die Inverterkapazitäten C1 und C2 jeweils 600 μF betragen. Tatsächlich wird die Resonanz in dem System durch die Ohmschen Widerstände gedämpft.

In dem betrachteten Fall erzeugen die Inverter 3 und 4 pulsweiten-modulierte (PWM) Ansteuersignale für die Motoren 1 und 2. Die PWM-Frequenz liegt beispielsweise bei 8 kHz. Da diese Frequenz in der Nähe der Resonanzfrequenz des Zwischenkreises liegt, werden sich auch einige Spektralanteile der PWM-Signale der Inverter 3 und 4 nahe der Resonanzfrequenz befinden. Diese Signalanteile werden entsprechend der Systemantwort von FIG 3 verstärkt. Diese ungewollten Verstärkungen beanspruchen die Zwischenkreis- bzw. Eingangskapazitäten C1 und C2. Sie sind daher entsprechend zu dimensionieren. Außerdem entstehen durch die ungewollten Verstärkungen bzw. Resonanzüberhöhungen deutliche Leistungsverluste.

In dem System von FIG 1 treten während des Betriebs im Wesentlichen drei Schwingungen mit ihren Harmonischen auf. Zum einen wäre dies beispielsweise die Frequenz 8 kHz, mit der der Inverter betrieben wird. Zum anderen werden die Motoren beispielsweise mit einer mittleren elektrischen Geschwindigkeit von 120 Hz betrieben. Aufgrund von nicht idealen Phänomenen in den Invertern und Motoren ergibt sich dadurch im Zwischenkreis eine Harmonische, die der sechsfachen Frequenz der elektrischen Motorfrequenz entspricht und daher im gewählten Beispiel bei 720 Hz liegt. Des Weiteren kommt eine dritte Schwingung dadurch zustande, dass die beiden Motoren beispielsweise eine Geschwindigkeitsdifferenz von 20 Hz besitzen.

Um das Spektrum des im Zwischenkreis fließenden Stroms iL besser zu verstehen, wird die folgende Analyse auf ein dynamisches Modell basiert. Darin werden nur die hohen Frequenzen repräsentiert. Der Inverter arbeitet bei einer festen Pulsfrequenz von 8 kHz. Infolge von Nichtlinearitäten in dem Inverter/Motor-System dient die 8 kHz-Frequenz als Modulationsträger des Stromsignals.

Die PWM-Frequenz eines Inverters lässt sich notieren als

$$\omega_{INV} = 2 \cdot \pi \cdot 8000.$$

Die elektrische Motorfrequenz wird mit $\omega_{MOTOR}$ bezeichnet.

Der Gleichstrom für einen Motor ergibt sich dann zu

$$i(t) = A\sin(\omega_{INV} \cdot t + \varphi_{INV}) \cdot \sin(6 \cdot \omega_{MOTOR} \cdot t + 6 \cdot \varphi_{MOTOR})$$

$$i(t) = \frac{A}{2}\left[\cos(\omega_{INV} \cdot t - 6 \cdot \omega_{MOTOR} \cdot t + \varphi_{INV} - 6 \cdot \varphi_{MOTOR}) - \cos(\omega_{INV} \cdot t + 6 \cdot \omega_{MOTOR} \cdot t + \varphi_{INV} + 6 \cdot \varphi_{MOTOR})\right]$$

Demnach erzeugt ein Motor zwei Harmonische, wie die obigen Kosinusargumente zeigen. Diese ergeben sich aus einer Multiplikation der Sinuswerte der Inverterfrequenzen und der Motorfrequenzen.

Jeder der Motoren des Antriebssystems bzw. der Antriebsvorrichtung erzeugt einen derartigen Strom i1 und i2, wie dies auch in den FIG 1 und 2 angedeutet ist. Beide Ströme werden richtungsabhängig summiert, so dass sich der folgende Gesamtstrom ergibt:

$$i(t) = i_1(t) - i_2(t).$$

Schließlich ergeben sich je zwei Harmonische um die Schaltfrequenzen $\varphi_{INV\,1}$ und $\varphi_{INV2}$ der Inverter:

$$\omega_1 = \omega_{INV\,1} - 6 \cdot \omega_{MOTOR\,1}$$

$$\omega_2 = \omega_{INV\,1} + 6 \cdot \omega_{MOTOR\,1}$$

$$\omega_3 = \omega_{INV\,2} - 6 \cdot \omega_{MOTOR\,2}$$

$$\omega_4 = \omega_{INV\,2} + 6 \cdot \omega_{MOTOR\,2}$$

Die folgende Simulation zeigt die im Zwischenkreis auftretenden Ströme iL im Zeitbereich. Die Frequenzen werden wie folgt gewählt:

$$f_{INV\,1} = 8\,kHz$$

$$f_{MOTOR\,1} = 116.7\,Hz$$

$$f_{INV\,2} = 8\,kHz$$

$$f_{MOTOR\,2} = 118.7\,Hz$$

Die Frequenzen beider Inverter werden hier also gleich gewählt, so dass eine gemeinsame Schaltfrequenz für die Inverter vorliegt. Die elektrischen Motorfrequenzen unterscheiden sich um 20 Hz.

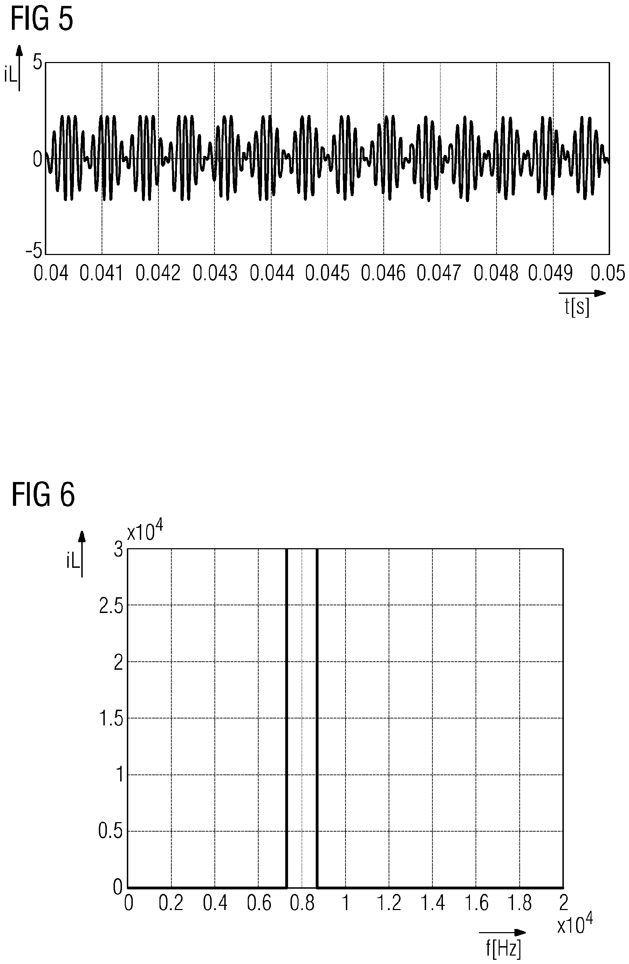

Die FIG 4 und 5 zeigen das simulierte Stromsignal iL auf der Basis der obigen Frequenzen. Dabei zeigt FIG 5 den Ausschnitt zwischen 0,04 s und 0,05 s aus FIG 4 in vergrößertem Maßstab.

Dort ist dann auch die Feinstruktur des Signals und insbesondere die Schaltfrequenz der Inverter zu erkennen.

Das Spektrum des simulierten Signals ist in FIG 6 wiedergegeben. Dort zeigen sich wesentliche Spektralanteile bei 7.300 Hz und 8.700 Hz. Diese Spektralanteile rühren von den Motorgeschwindigkeiten her, die eine Frequenz von 700 Hz liefern. Zusammen mit der PWM-Frequenz der Inverter von 8 kHz ergibt sich nämlich: 8.000 Hz - 700 Hz = 7.300 Hz bzw. 8.000 Hz + 700 Hz = 8.700 Hz.

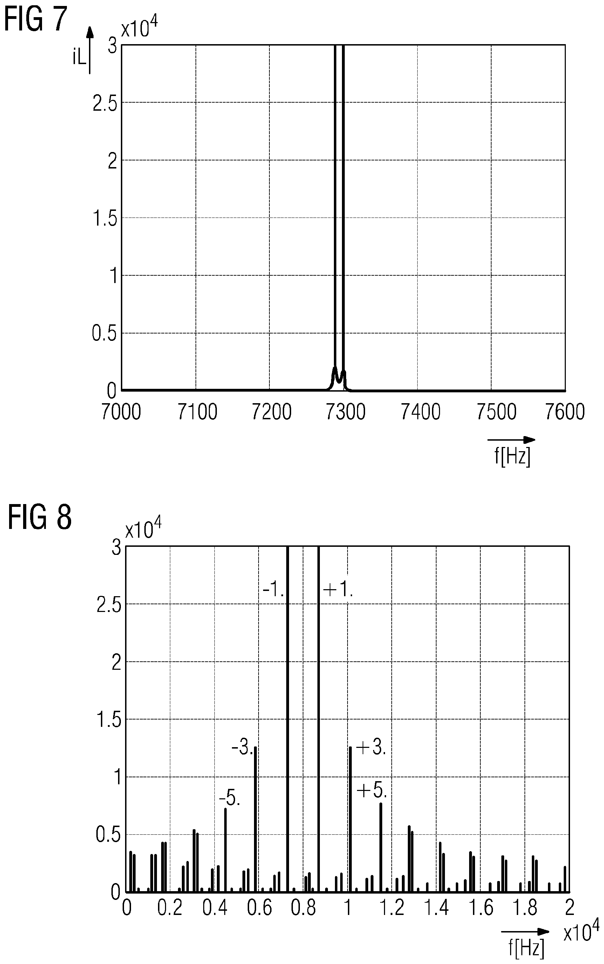

Wie der vergrößerte Ausschnitt des Spektrums von FIG 7 zeigt, führt der geringe Unterschied in den Motorgeschwindigkeiten zu zwei verschiedenen Spektrallinien. Die eine Spektrallinie liegt tatsächlich bei 7.300 Hz, während die andere um 12 Hz darunter bei 7.288 Hz liegt.

Werden bei der Simulation auch höhere ungeradzahlige Harmonische berücksichtigt, die von den Motorfrequenzen um die Schaltfrequenz hervorgerufen werden, ergibt sich das in FIG 8 dargestellte Spektrum. Es entstehen dabei bezogen auf die Frequenz von 700 Hz, die durch die Motorfrequenzen bzw. die mittlere Motorfrequenz hervorgerufen wird, ungerade Harmonische zur linken und rechten Seite der Schaltfrequenz von 8 kHz. Insbesondere entstehen auf der rechten Seite der Schaltfrequenz die positiven Harmonischen "+1.", "+3.", "+5." etc. Auf der linken Seite entstehen die negativen Harmonischen "-1.", "-3.", "-5." etc.

Diese Frequenzen sind üblicherweise kein Problem, so lange sie sich nicht in der Nähe der Resonanzfrequenz des Systems bzw. des Zwischenkreises gemäß FIG 3 befinden. Wenn sich jedoch die Motorgeschwindigkeiten ändern, ändern sich auch die harmonischen Frequenzen, und es kann vorkommen, dass eine dieser harmonischen Frequenzen in den Resonanzbereich gerät und dort übermäßig verstärkt wird. Die Bauelemente der Antriebsvorrichtung müssen dann diese Stromüberhöhung aushalten und außerdem kommt es hierdurch zu Leistungsverlusten.

Aus dem Dokument EP 1 186 464 A2 ist ein gattungsgemäßes Verfahren zum Antreiben eines Fahrzeugs bzw. eine entsprechende Antriebsvorrichtung bekannt. Die Motoren werden über zwei Inverter angesteuert, welche über einen Zwischenkreis gespeist werden. Die Inverter werden bei einer Schaltfrequenz betrieben, sodass sich im Zwischenkreis entsprechende Harmonische ergeben.

Weiterhin offenbart die Druckschrift US 5 191 273 A ein Steuerungsverfahren für eine Induktionsmaschine eines Wasserkraftwerks. Der Generator ist an ein Energieübertragungssystem angeschlossen, dessen Impedanzspektrum eine Spitze aufweist. Harmonische Komponenten, die von einem an dem Generator angeschlossenen Inverter stammen, werden so gelegt, dass sie nicht auf die Resonanzspitze des Übertragungssystems fallen.

Darüber hinaus zeigt Dokument JP 2009/060691 A einen über einen Inverter betriebenen Motor. Ein Glättungskondensator im Zwischenkreis wird so groß gewählt, dass eine resultierende Resonanz über der Frequenz eines durch den Inverter hervorgerufenen Rippelstroms liegt.

Dokument JP H11 18435 A zeigt eine Energieübertragung zwischen einem PWM-Converter und einem PWM-Inverter. Eine Schaltfrequenz des PWM-Converters und des PWM-Inverters wird so eingestellt, dass sie unterhalb der Resonanzfrequenz eines Koppelglieds multipliziert mit $\sqrt{0,5}$ liegt.

Die Aufgabe der vorliegenden Erfindung besteht somit darin, ein Verfahren zum Antreiben eines Fahrzeugs bereitzustellen, mit dem geringere Leistungsverluste realisierbar sind und das es ermöglicht, die Bauelemente geringer zu dimensionieren.

- Erfindungsgemäß wird diese Aufgabe gelöst durch ein Verfahren nach Anspruch 1.

Darüber hinaus wird erfindungsgemäß bereitgestellt eine Antriebsvorrichtung nach Anspruch 9.

In vorteilhafter Weise werden also bei den Invertern die Schaltfrequenzen bzw. die gemeinsame Schaltfrequenz verschoben. Durch das Verschieben wird ein vorgegebener Abstand zur Resonanzfrequenz des Zwischenkreises (zu dem auch die Koppelkapazitäten der Inverter zählen) gewährleistet. Dabei kann es sich um einen Mindestabstand handeln, der bei dem Verschieben auch überschritten werden kann. Somit lässt sich erreichen, dass ein Resonanzbereich an oder um die Resonanzfrequenz des Zwischenkreises von den Harmonischen freigehalten wird. Folglich treten keine überhöhten Ströme auf und die Koppelkondensatoren der Inverter können geringer dimensioniert werden. Außerdem treten weniger Leistungsverluste auf.

Durch den vorgebbaren Abstand ist ein Bereich zu beiden Seiten um die Resonanzfrequenz gegeben, der von der zumindest einen Harmonischen freigehalten wird. Hierdurch wird ein Mindestabstand zu beiden Seiten der Resonanzfrequenz vorgegeben, der von den Harmonischen einzuhalten ist.

Die zumindest eine Harmonische kann die durch die elektrischen Motorfrequenzen hervorgerufene erste Harmonische sein. Diese erste Harmonische ergibt sich aus dem Sechsfachen der jeweiligen elektrischen Motorfrequenz.

Darüber hinaus kann die Schaltfrequenz jedes Inverters so eingestellt oder gesteuert werden, dass alle ersten Harmonischen um die Schaltfrequenz stets jeweils einen vorgegebenen Abstand von der Resonanzfrequenz besitzen. Dies bedeutet, dass nicht nur die positive erste Harmonische, sondern auch die negative erste Harmonische den genannten Abstand einhalten muss.

Zudem kann es auch von Vorteil sein, wenn neben den ersten Harmonischen auch alle dritten Harmonischen jeweils einen vorgebbaren Abstand von der Resonanzfrequenz besitzen. Dies sollte insbesondere dann angestrebt werden, wenn die dritten Harmonischen so hohe Amplituden besitzen, dass sie die Kopplungskondensatoren der Inverter bei Resonanzüberhöhung zu sehr beanspruchen.

In diesem Zusammenhang ist es gegebenenfalls auch von Vorteil, dass die Schaltfrequenz jedes Inverters nur dann verändert wird, wenn die ersten und dritten Harmonischen um die Schaltfrequenz den jeweils vorgebbaren Abstand nicht einhalten. Haben nämlich beispielsweise die fünften und höheren Harmonischen eine so geringe Amplitude, dass sie durch die Resonanzüberhöhung die Koppelkondensatoren der Inverter nicht übermäßig beanspruchen, so kann darauf verzichtet werden, dass die Schaltfrequenzen der Inverter geändert werden, wenn die fünften oder höheren Harmonischen in den Bereich der Resonanzfrequenz geraten.

Besonders bevorzugt ist, wenn der vorgebbare Abstand in Abhängigkeit von einer Amplitude des jeweiligen Spektralanteils gewählt wird. Typischerweise besitzen die ersten Harmonischen eine höhere Amplitude als die dritten Harmonischen. In diesem Fall kann der einzuhaltende Mindestabstand der dritten Harmonischen zur Resonanzfrequenz geringer sein als derjenige der ersten Harmonischen, da die dritten Harmonischen dann mehr verstärkt werden können als die ersten Harmonischen, ohne negative Folgen zu verursachen.

Die Ansteuersignale der Motoren können pulsweiten-modulierte Signale sein. Damit lässt sich die vorliegende Erfindung auf übliche Inverter anwenden.

Durch die oben genannten Verfahrensschritte sind indirekt auch Mittel definiert, mit denen sich diese Verfahrensschritte realisieren lassen und die Teil einer entsprechenden Antriebsvorrichtung sein können.

Die vorliegende Erfindung wird nun anhand der beigefügten Zeichnungen näher erläutert, in denen zeigen:

FIG 1    ein Schema einer Antriebsvorrichtung für ein Fahrzeug mit zwei Motoren, das auch Grundlage für die vorliegende Erfindung sein kann;

FIG 2    ein vereinfachtes Schaltdiagramm des Zwischenkreises von FIG 1;

FIG 3    eine Übertragungsfunktion des Zwischenkreises von FIG 2;

FIG 4    einen simulierten Stromverlauf im Zwischenkreis;

FIG 5    einen vergrößerten Ausschnitt des Signals von FIG 4;

FIG 6    das Spektrum zu dem Signal von FIG 4;

FIG 7    einen Ausschnitt des Spektrums von FIG 6;

FIG 8    ein Spektrum eines simulierten Signals mit mehreren Harmonischen;

FIG 9    eine Harmonische im Resonanzbereich;

FIG 10   eine aus dem Resonanzbereich nach unten herausgeschobene Harmonische;

FIG 11   eine aus dem Resonanzbereich nach oben herausgeschobene Harmonische; und

FIG 12   unterschiedliche freigehaltene Bereiche um die Resonanzfrequenz.

Die nachfolgend näher geschilderten Ausführungsbeispiele stellen bevorzugte Ausführungsformen der vorliegenden Erfindung dar.

Ein erfindungsgemäßes Verfahren basiert auf demjenigen, das in Verbindung mit den FIG 1 bis 8 oben erläutert wurde. Es wird also auf die Beschreibung zu diesen FIG verwiesen. Zusätzlich sind die Inverter 3, 4 dazu ausgelegt, dass sie ihre Schaltfrequenz selbsttätig ändern können oder dass sie so angesteuert werden, dass sich ihre Schaltfrequenz ändert. Es wird also die Inverterfrequenz (z.B. die PWM-Frequenz oder eine andere digitale Modulationsfrequenz) geändert, damit die Resonanzfrequenz des Zwischenkreises nicht angeregt wird. Dieses Verfahren kann für zwei oder mehr Schalt-Inverter genutzt werden.

Wie eingangs dargestellt wurde, hängen die Frequenzen im Zwischenkreis von den elektrischen Motorfrequenzen $\omega_{MOTOR}$ und von der Inverter- bzw. Schaltfrequenz $\omega_{INV}$ ab. Es werden dabei folgende harmonische Frequenzen (im Folgenden auch "durch Motorfrequenzen hervorgerufene Harmonische" bezeichnet) auf der Gleichstromseite durch jeden Inverter erzeugt:

$$\omega_{2k+1} = \omega_{INV} + (2k+1) \cdot 6 \cdot \omega_{MOTOR}$$
$$k \in Z$$

Dabei bedeutet also k eine positive oder negative ganze Zahl einschließlich 0.

Um die Resonanzfrequenz des Zwischenkreises kann ein Bereich definiert werden, der von etwaigen Harmonischen freigehalten werden muss, welche durch obige Formel definiert sind. Diese Harmonischen, die zu beiden Seiten der Schaltfrequenz $\omega_{INV}$ angeordnet sind, sind, wie erwähnt, in FIG 8 dargestellt.

Der Grundgedanke besteht nun darin, irgendwelche Harmonischen in einem vorgegebenen bzw. vorgebbaren Bereich um die Resonanzfrequenz herauszuhalten. Mit anderen Worten: Es soll ein Mindestabstand von einer Harmonischen zu der Resonanzfrequenz gewährleistet sein.

Um nun den verbotenen bzw. freizuhaltenden Bereich zu meiden, wird im folgenden Beispiel also die PWM-Frequenz geändert. Für das folgende Beispiel werden auch die Größen des Beispiels im einleitenden Teil der Beschreibung wie folgt übernommen:

C1 = C2 = 600 $\mu$F
L = 1,5 $\mu$H

Damit ergibt sich wieder die Resonanzfrequenz des Zwischenkreises bei 5,3 kHz.

Die für beide Inverter verwendete Schaltfrequenz liegt bei 8 kHz.

Messungen an dem Antriebsstrang eines Elektrofahrzeugs haben gezeigt, dass im Wesentlichen nur die ersten, dritten und fünften Harmonischen von Bedeutung sind. Daher werden nachfolgend nur diese berücksichtigt.

Die Fahrzeuggeschwindigkeit ist beispielsweise direkt mit der Motordrehzahl und somit auch mit der elektrischen Motorfrequenz gekoppelt. Der Bereich der elektrischen Motorfrequenz kann zwischen 0 und 300 Hz liegen. Liegt die elektrische Motorfrequenz beispielweise bei 150 Hz, so ergeben sich im Spektrum des Zwischenkreises folgende Frequenzen bzw. Harmonische:

$$\omega_{-5} = 8.000 - 5 \cdot 6 \cdot 150 = 3.500 \, Hz$$

$$\omega_{-3} = 8.000 - 3 \cdot 6 \cdot 150 = 5.300 \, Hz$$

$$\omega_{-1} = 8.000 - 1 \cdot 6 \cdot 150 = 7.100 \, Hz$$

$$\omega_{1} = 8.000 + 1 \cdot 6 \cdot 150 = 8.900 \, Hz$$

$$\omega_{3} = 8.000 + 3 \cdot 6 \cdot 150 = 10.700 \, Hz$$

$$\omega_{5} = 8.000 + 5 \cdot 6 \cdot 150 = 12.500 \, Hz.$$

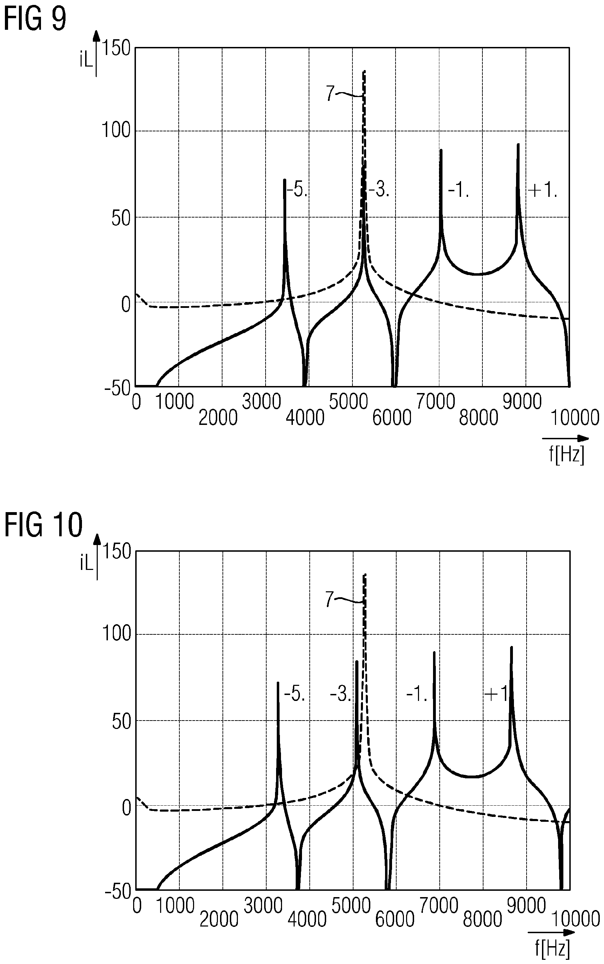

Dies bedeutet, dass die negative dritte Harmonische sich im Resonanzbereich 7 des Zwischenkreises befindet, was auch in FIG 9 dargestellt ist. Es wird nun beispielsweise ein verbotener Bereich zwischen 5,1 kHz und 5,5 kHz definiert. Dies bedeutet, dass sich eine Harmonische des Stroms im Zwischenkreis nicht in diesem Bereich befinden darf, d.h. sie muss nach beiden Seiten der Resonanzfrequenz einen Mindestabstand von 200 Hz einhalten. Diese Vorschrift kann beispielsweise nur für die ersten Harmonischen oder die ersten und dritten Harmonischen oder die ersten, dritten und fünften Harmonischen etc. gelten.

Wird nun die PWM-Frequenz um 200 Hz geändert, würde die negative dritte Harmonische ausreichend verschoben werden, um aus dem Resonanzbereich 7 zu geraten. Normalerweise würde die Inverterfrequenz um 200 Hz von 8 kHz auf 7,8 kHz gesenkt werden, um die Verluste im Inverter bzw. in den Invertern zu senken. Dadurch würde sich das Spektrum gemäß FIG 10 einstellen. Es ist zu erkennen, dass die negative dritte Harmonische unterhalb des Resonanzbereichs 7 angeordnet ist. Sie liegt dann bei $\omega_{-3}$ = 7.800-3·6·150=5.100 *Hz*.

Alternativ kann die PWM-Frequenz natürlich auch um 200 Hz nach oben auf 8,2 kHz verschoben werden, um beispielsweise eine bessere Sinusform des Signals zu erhalten. Die negative dritte Harmonische liegt dann bei $\omega_{-3}$ = 8.200-3·6·150 = 5.500 *Hz*.

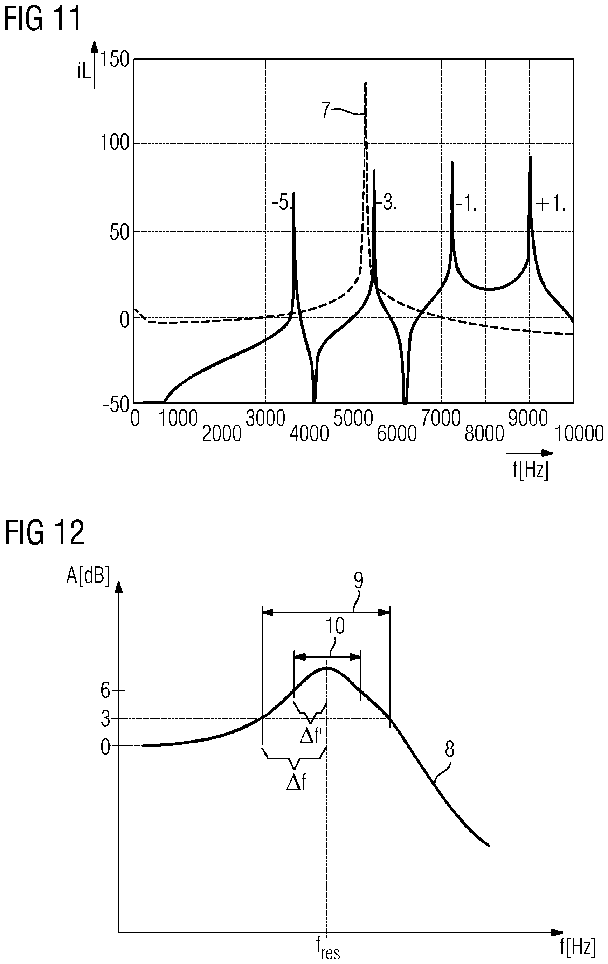

Wie FIG 11 zeigt, liegt die negative dritte Harmonische dann oberhalb des verbotenen Resonanzbereichs 7. Es kann somit ohne Hardwareänderung vermieden werden, dass das System in Resonanz angeregt wird.

FIG 12 zeigt genauer, wie der vorgebbare Abstand der Harmonischen von der Resonanzfrequenz $f_{res}$ definiert werden kann. Wie in FIG 3 ist auch hier eine Übertragungsfunktion 8 speziell im Bereich der Resonanzfrequenz $f_{res}$ dargestellt. Die erste Harmonische des Stromsignals im Zwischenkreis soll beispielsweise höchstens um 3 dB verstärkt werden. Dadurch ergibt sich ein Bereich 9 um die Resonanzfrequenz, in den die erste Harmonische nicht eintreten darf. Dieser Bereich 9 kann symmetrisch oder unsymmetrisch zur Resonanzfrequenz $f_{res}$ liegen. Im symmetrischen Fall erstreckt sich der Bereich also von $f_{res}$ - Δf bis $f_{res}$ + Δf, wobei Δf den mindestens einzuhaltenden Abstand zur Resonanzfrequenz $f_{res}$ angibt. Im unsymmetrischen Fall ist beispielsweise der mindestens einzuhaltende Abstand von der Resonanzfrequenz $f_{res}$ auf der linken Seite größer als der mindestens einzuhaltende Abstand auf der rechten Seite.

Darf eine Harmonische um beispielsweise 6 dB verstärkt werden, so darf sie näher an die Resonanzfrequenz geraten. Demzufolge ist auch der verbotene Bereich 10 kleiner als der Bereich 9, wenn nur 3 dB Verstärkung erlaubt sind. Entsprechend ist dann auch der Mindestabstand Δf' kleiner als Δf.

Der verbotene Bereich 9, 10 kann für jede Harmonische unterschiedlich definiert werden. Beispielsweise kann er von der Amplitude der Harmonischen abhängig gemacht werden. Wenn also die Amplitude der ersten Harmonischen größer als diejenige der dritten Harmonischen ist, kann die dritte Harmonische näher an die Resonanzfrequenz geraten, ohne dass ein vorgegebener Maximalstrom überschritten wird.

Der verbotene Bereich 9, 10 kann aber auch von der insgesamt angeforderten Leistung des oder der Inverter abhängig gemacht werden. Wird nämlich beispielsweise eine geringe Leistung angefordert, so kann eine Harmonische näher an die Resonanzfrequenz geraten, ohne dass eine kritische Stromstärke überschritten wird. Umgekehrt muss bei hoher angeforderter Leistung eine Harmonische weiter von der Resonanzfrequenz abgehalten werden.

Da also gemäß den obigen Beispielen verhindert wird, dass eine kritische Stromstärke im Zwischenkreis überschritten wird, werden die Koppelkapazitäten der Inverter weniger beansprucht und können daher für geringere Stromstärken bzw. Leistungen dimensioniert werden.

**Patentansprüche**

1. Verfahren zum Antreiben eines Fahrzeugs mit mindestens zwei Motoren (1, 2) durch

    - Ansteuern jedes der Motoren mit je einem Ansteuersignal, welches eine jeweiligen elektrische Motorfrequenz aufweist, durch je einen Inverter (3, 4) und
    - Versorgen der Inverter über einen Zwischenkreis (5), der eine Resonanzfrequenz aufweist, mit Strom von einer Stromquelle (6), wobei
    - die Inverter (3, 4) jeweils eine Schaltfrequenz aufweisen, und
    - im Zwischenkreis (5) Spektralanteile des dort fließenden Stroms auftreten, die aus den elektrischen Motorfrequenzen resultierende Harmonische (-5., -3., -1., +1., +3., +5.) um die jeweilige Schaltfrequenz aufweisen,

    **dadurch gekennzeichnet, dass**

    - die Schaltfrequenz jedes Inverters (3, 4) so eingestellt oder gesteuert wird, dass zumindest eine der Harmonischen um die jeweilige Schaltfrequenz stets mindestens einen vorgebbaren Abstand ($\Delta f$, $\Delta f'$) von der Resonanzfrequenz ($f_{res}$) besitzt und
    - durch den vorgebbaren Abstand ($\Delta f$, $\Delta f'$) ein Bereich (9, 10) zu beiden Seiten um die Resonanzfrequenz gegeben ist, der von der zumindest einen Harmonischen freigehalten wird.

2. Verfahren nach Anspruch 1, wobei die zumindest eine Harmonische eine erste Harmonische (-1., +1.) ist, die durch die elektrischen Motorfrequenzen hervorgerufen ist.

3. Verfahren nach Anspruch 2, wobei die Schaltfrequenz der Inverter (3, 4) so eingestellt oder gesteuert wird, dass alle ersten Harmonischen (-1., +1.) um die Schaltfrequenz stets jeweils einen vorgebbaren Abstand von der Resonanzfrequenz besitzen.

4. Verfahren nach Anspruch 3, wobei neben den ersten Harmonischen (-1., +1.) auch alle dritten Harmonischen (-3., +3.) jeweils einen vorgebbaren Abstand von der Resonanzfrequenz besitzen.

5. Verfahren nach einem der vorhergehenden Ansprüche, wobei die Schaltfrequenz der Inverter (3, 4) nur dann verändert wird, wenn die ersten und dritten Harmonischen der elektrischen Motorfrequenz um die Schaltfrequenz den jeweils vorgebbaren Abstand nicht einhalten.

6. Verfahren nach einem der vorhergehenden Ansprüche, wobei der vorgebbare Abstand ($\Delta f$, $\Delta f'$) in Abhängigkeit von einer Amplitude des jeweiligen Spektralanteils gewählt wird.

7. Verfahren nach Anspruch 6, wobei der vorgebbare Abstand ($\Delta f$, $\Delta f'$) für eine erste Harmonische größer ist als für eine dritte Harmonische.

8. Verfahren nach einem der vorhergehenden Ansprüche, wobei die Ansteuersignale der Motoren (1, 2) pulsweitenmodulierte Signale sind.

9. Antriebsvorrichtung für ein Fahrzeug mit

    - mindestens zwei Invertern (3, 4) zur Ansteuerung jeweils eines Motors (1, 2) mit je einem Ansteuersignal, welches eine jeweiligen elektrische Motorfrequenz aufweist, und
    - einem Zwischenkreis (5), über den die mindestens zwei Inverter (3, 4) von einer Stromquelle (6) mit Strom versorgbar sind und der eine Resonanzfrequenz ($f_{res}$) aufweist, wobei
- die mindestens zwei Inverter (3, 4) jeweils eine Schaltfrequenz aufweisen, und
- im Zwischenkreis (5) bei Betrieb Spektralanteile des dort fließenden Stroms auftreten, die aus den elektrischen Motorfrequenzen resultierende Harmonische (-5., - 3., -1., +1., +3., +5.) um die jeweilige Schaltfrequenz aufweisen,

**dadurch gekennzeichnet, dass**

- die Schaltfrequenz der Inverter (3, 4) so eingestellt oder gesteuert ist, dass zumindest eine der Harmonischen um die jeweilige Schaltfrequenz stets mindestens einen vorgebbaren Abstand ($\Delta f$, $\Delta f'$) von der Resonanzfrequenz besitzt, und
- durch den vorgebbaren Abstand ($\Delta f$, $\Delta f'$) ein Bereich (9, 10) zu beiden Seiten um die Resonanzfrequenz gegeben ist, der von der zumindest einen Harmonischen freigehalten wird.

## Claims

1. Method for driving a vehicle comprising at least two motors (1, 2) by

   - actuating each of the motors with in each case one actuation signal, which has a respective electrical motor frequency, by means of in each case one inverter (3, 4), and
   - supplying current from a current source (6) to the inverters via a DC link (5), which has a resonant frequency, wherein
   - the inverters (3, 4) each have a switching frequency, and
   - in the DC link (5), spectral components of the current flowing there occur, said spectral components having harmonics (-5th, -3rd, -1st, +1st, +3rd, +5th) around the respective switching frequency which result from the electrical motor frequencies,

   **characterized in that**

   - the switching frequency of each inverter (3, 4) is set or controlled in such a way that at least one of the harmonics around the respective switching frequency always has at least one presettable spacing ($\Delta f$, $\Delta f'$) from the resonant frequency ($f_{res}$) and
   - a region (9, 10) on both sides around the resonant frequency is provided by the presettable spacing ($\Delta f$, $\Delta f'$), which region is kept free of the at least one harmonic.

2. Method according to Claim 1, wherein the at least one harmonic is a first harmonic (-1st, +1st), which is brought about by the electrical motor frequencies.

3. Method according to Claim 2, wherein the switching frequency of the inverters (3, 4) is set or controlled in such a way that all of the first harmonics (-1st, +1st) around the switching frequency always have in each case a presettable spacing from the resonant frequency.

4. Method according to Claim 3, wherein, in addition to the first harmonics (-1st, +1st), all of the third harmonics (-3rd, +3rd) also have in each case a presettable spacing from the resonant frequency.

5. Method according to one of the preceding claims, wherein the switching frequency of the inverters (3, 4) is only changed when the first and third harmonics of the electrical motor frequency around the switching frequency do not maintain the respectively presettable spacing.

6. Method according to one of the preceding claims, wherein the presettable spacing ($\Delta f$, $\Delta f'$) is selected depending on an amplitude of the respective spectral component.

7. Method according to Claim 6, wherein the presettable spacing ($\Delta f$, $\Delta f'$) is greater for a first harmonic than for a third harmonic.

8. Method according to one of the preceding claims, wherein the actuation signals of the motors (1, 2) are pulse-width-modulated signals.

**9.** Drive device for a vehicle comprising

- at least two inverters (3, 4) for actuating in each case one motor (1, 2) with in each case one actuation signal, which has a respective electrical motor frequency, and
- a DC link (5), via which current can be supplied to the at least two inverters (3, 4) from a current source (6) and which has a resonant frequency ($f_{res}$), wherein
- the at least two inverters (3, 4) each having a switching frequency, and
- in the DC link (5), spectral components of the current flowing there occur during operation, said spectral components having harmonics (-5th, -3rd, -1st, +1st, +3rd, +5th) around the respective switching frequency which result from the electrical motor frequencies,

**characterized in that**

- the switching frequency of the inverters (3, 4) is set or controlled in such a way that at least one of the harmonics around the respective switching frequency always has at least one presettable spacing ($\Delta f$, $\Delta f'$) from the resonant frequency, and
- a region (9, 10) on both sides around the resonant frequency is provided by the presettable spacing ($\Delta f$, $\Delta f'$), which region is kept free of the at least one harmonic.

**Revendications**

**1.** Procédé pour l'entraînement d'un véhicule comprenant au moins deux moteurs (1, 2) comprenant

- l'excitation de chacun des moteurs avec respectivement un signal d'excitation qui présente une fréquence de moteur électrique respective, à travers respectivement un onduleur (3, 4) ; et
- l'alimentation des onduleurs via un circuit intermédiaire (5), qui présente une fréquence de résonance, avec du courant provenant d'une source de courant (6) ; dans lequel
- les onduleurs (3, 4) présentent respectivement une fréquence de commutation ; et
- dans le circuit intermédiaire (5) apparaissent des fractions spectrales du courant qui y circule, qui présentent des harmoniques résultant des fréquences des moteurs électriques (-5., -3., -1., +1., +3., +5.,) autour de la fréquence de commutation respective ; **caractérisé en ce que**
- l'on règle ou l'on commande la fréquence de commutation de chaque onduleur (3, 4) d'une manière telle qu'au moins une des harmoniques autour de la fréquence de commutation respective possède toujours au moins un écart prédéfinissable ($\Delta f$, $\Delta f'$) par rapport à la fréquence de résonance ($f_{res}$) ; et
- grâce à l'écart prédéfinissable ($\Delta f$, $\Delta f'$), on obtient une zone (9, 10) de part et d'autre de la fréquence de résonance qui est exempte de ladite au moins une harmonique.

**2.** Procédé selon la revendication 1, dans lequel ladite au moins une harmonique représente une première harmonique (-1., +1.) qui est générée par les fréquences des moteurs électriques.

**3.** Procédé selon la revendication 2, dans lequel la fréquence de commutation des onduleurs (3, 4) est réglée ou est commandée d'une manière telle que toutes les premières harmoniques (-1., +1.) autour de la fréquence de commutation possèdent toujours respectivement un écart prédéfinissable par rapport à la fréquence de résonance.

**4.** Procédé selon la revendication 3, dans lequel, à côté des premières harmoniques (-1., +1.), également toutes les troisièmes harmoniques (-3., +3.) possèdent respectivement un écart prédéfinissable par rapport à la fréquence de résonance.

**5.** Procédé selon l'une quelconque des revendications précédentes, dans lequel la fréquence de commutation des onduleurs (3, 4) n'est modifiée que lorsque les premières et les troisièmes harmoniques de la fréquence des moteurs électriques autour de la fréquence de commutation ne gardent pas l'écart respectivement prédéfinissable.

**6.** Procédé selon l'une quelconque des revendications précédentes, dans lequel l'écart prédéfinissable ($\Delta f$, $\Delta f'$) est sélectionné en fonction d'une amplitude de la fraction spectrale respective.

**7.** Procédé selon la revendication 6, dans lequel l'écart prédéfinissable ($\Delta f$, $\Delta f'$) pour une première harmonique est supérieur à celui destiné à une troisième harmonique.

8. Procédé selon l'une quelconque des revendications précédentes, dans lequel les signaux d'excitation des moteurs (1, 2) représentent des signaux présentant une modulation de largeur d'impulsion.

9. Dispositif d'entraînement pour un véhicule, comprenant :

   - au moins deux onduleurs (3, 4) pour l'excitation de respectivement un moteur (1, 2) avec respectivement un signal d'excitation qui présente une fréquence respective de moteur électrique ; et
   - un circuit intermédiaire (5) par le biais duquel lesdits au moins deux onduleurs (3, 4) peuvent être alimentés avec du courant à partir d'une source de courant (6), et qui présente une fréquence de résonance ($f_{res}$) ; dans lequel
   - lesdits au moins deux onduleurs (3, 4) présentent respectivement une fréquence de commutation ; et
   - dans le circuit intermédiaire (5), en état de marche, apparaissent des fractions spectrales du courant qui y circule, qui présentent des harmoniques résultant des fréquences des moteurs électriques (-5., -3., -1., +1., +3., +5.,) autour de la fréquence de commutation respective ; **caractérisé en ce que**
   - la fréquence de commutation des onduleurs (3, 4) est réglée ou commandée d'une manière telle qu'au moins une des harmoniques autour de la fréquence de commutation respective possède toujours au moins un écart prédéfinissable ($\Delta f$, $\Delta f'$) par rapport à la fréquence de résonance ; et
   - grâce à l'écart prédéfinissable ($\Delta f$, $\Delta f'$), on obtient une zone (9, 10) de part et d'autre de la fréquence de résonance, qui est exempte de ladite au moins une harmonique.

FIG 1

FIG 2

## FIG 3

## FIG 4

FIG 5

FIG 6

**FIG 7**

**FIG 8**

FIG 9

FIG 10

FIG 11

FIG 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1186464 A2
- US 5191273 A
- JP 2009060691 A
- JP H1118435 A